# EUROPEAN PATENT APPLICATION

(11) **EP 4 446 105 A1**
(43) Date of publication of application: **16.10.2024**
(21) Application number: 23382337.6
(22) Date of filing: 12.04.2023
(51) Int. Cl.: B31B 50/04, B31B 50/06, B31B 50/59, B31B 50/62, B31B 50/64, B31B 50/98, B65D 5/20, B65D 5/32, B65D 5/44, B65D 5/56, B31B 105/00, B31B 110/10, B31B 110/30, B31B 120/40

(54) **DEVICE FOR FORMING HEAT-SEALABLE PACKAGING**

(71) Applicant: Solidus Solutions Videcart, S.A., 31486 Ibiricu de Egües ( Navarra) (ES)
(72) Inventor: AGUADO GONZÁLEZ, Ignacio Ramón, 31486 IBIRICU DE EGÜES (NAVARRA) (ES); ESTEVES DA TORRE, Felisberto, 31486 IBIRICU DE EGÜES (NAVARRA) (ES)
(74) Representative: Herrero & Asociados, S.L.

(57) **Abstract**

Device for forming heat-sealable trays of the type described in document EP3988463. The tray is formed by joining a first die-cut sheet (IN) which forms the inner part of the tray, and a second die-cut sheet (OUT) which forms the outer envelope where the upper lip of the tray is formed. A heat-sealed plastic sheet covers the tray. The device comprises:
- a loading table (1), where the sheets (IN,OUT) are stacked and aligned;
- an assembly machine (2), where the sheets (IN,OUT) are separated from their respective stacks for the subsequent shaping of the tray by bonding them with adhesive and applying a pressure mould to give it its final shape;
- a heat sealer, for application of the plastic film on the surface of the tray;
- a loader-counter, for stacking the formed trays; and
- a packer, for packing the trays.

## Description

### Object of the invention

The present invention falls within the technical field of thermoforming, as well as in the field of the delivery of articles from the machines. In particular, it concerns a device for forming heat-sealable packaging.

### Background to the invention

The European Patent application with publication number EP3988463, owned by the same applicant, describes a heat-sealable packaging and a process for manufacturing such a packaging. The packaging comprises an inner container formed from a first flat sheet of cellulose material, an outer shell, linked to an upper end of the container in the vicinity of its upper opening, formed from a second sheet of cellulose material, flat and die-cut, comprising at least one outer perimeter surface giving rise to a flat surface around the upper opening of the container for closing the container by heat-sealing of a plastic sheet, and a plastic coating film covering at least the inner side of the container and the outer perimeter surface of the outer shell. The first sheet and the second sheet have different and independent perimeter dimensions and outlines.

The main feature of this tray is the formation of a smooth, continuous upper lip which ensures a perfect, leak-free seal. The subject of the present patent application is a device for forming such a tray.

Various patent documents relating to devices of this type are known in the current state of the art. For example, document with publication number FR2480708 discloses a device for forming heat-sealable trays, of the type comprising an inner container, an outer casing and a plastic covering film. The device comprises an erector with an upper male mould for acting on the sheets; an intermediate frame for supporting the sheet; and a lower female mould for deforming the set of sheets.

Document EP1880828A1 discloses a device for forming heat-sealable trays of the type comprising an internal container formed from a flat sheet; wherein the device comprises an erector comprising an upper female mould for acting on the sheet; an intermediate frame for supporting the sheet; and a lower male mould for deforming the set of sheets.

### Description of the invention

The object of the invention consists of a device for forming heat-sealable trays of the type described in document EP3988463. The tray is formed by joining a first die-cut sheet which forms the inner part of the tray, hereinafter referred to as the "IN" sheet, and a second die-cut sheet which forms the outer shell where the upper lip of the tray is formed, hereinafter referred to as the "OUT" sheet. A heat-sealed plastic sheet covers the tray once the "IN" and "OUT" sheets have been joined and formed.

The forming device basically comprises the following consecutive and interlinked elements:
- a loading table, where the IN and OUT sheets are correctly stacked and aligned for subsequent transport to the next element;
- an assembly machine, where the IN and OUT sheets are separated from their respective stacks for the subsequent shaping of the tray by bonding them with adhesive and applying a pressure mould to give it its final shape;
- a heat sealer, for application of the plastic film on the surface of the tray;
- a loader-counter, for stacking of already formed trays; and
- a packer, for packing the finished trays.

The last three elements are of the type currently on the market and are therefore part of the state of the art.

### Description of the drawings

In order to complement the description being made and in order to assist in a better understanding of the features of the invention, in accordance with a preferred example of a practical embodiment thereof, a set of drawings is attached hereto as an integral part of the said description, in which the following is illustratively and non-limitingly depicted:
Figure 1.- Shows an overview of the loading table of the device.
Figure 2.- Shows a detailed image of the loading table positioning element, with a stack of sheets.
Figure 3.- Shows a detail of the conveyor element with a stack of sheets.
Figure 4.- Shows an overview of the assembly machine.
Figure 5.- Shows a general view of the loader that is part of the assembly machine.
Figure 6.- Shows a view of the fundamental elements of the forming device.

### Preferred embodiment of the invention

A detailed explanation of an example of a preferred embodiment of the subject matter of the present invention is given below with the aid of the figures referred to above.

The device for forming heat-sealable trays described is designed for forming heat-sealable trays of the type described in document EP3988463. The tray is formed by joining a first die-cut sheet (IN) which forms the inner part of the tray, and a second die-cut sheet (OUT) which forms the outer envelope where the upper lip of the tray is formed. A heat-sealed plastic sheet covers the tray once the first (IN) and second (OUT) die-cut sheets have been joined and formed.

The device is made up of the following consecutive and interlinked elements:
- a loading table (1);
- an assembly machine (2);
- a heat sealer;
- a charger-counter; and
- a packer.

The last three elements are of the type currently on the market and are therefore part of the state of the art. An external controller, not shown in the figures, is linked to all elements of the device and automates and governs their operation.

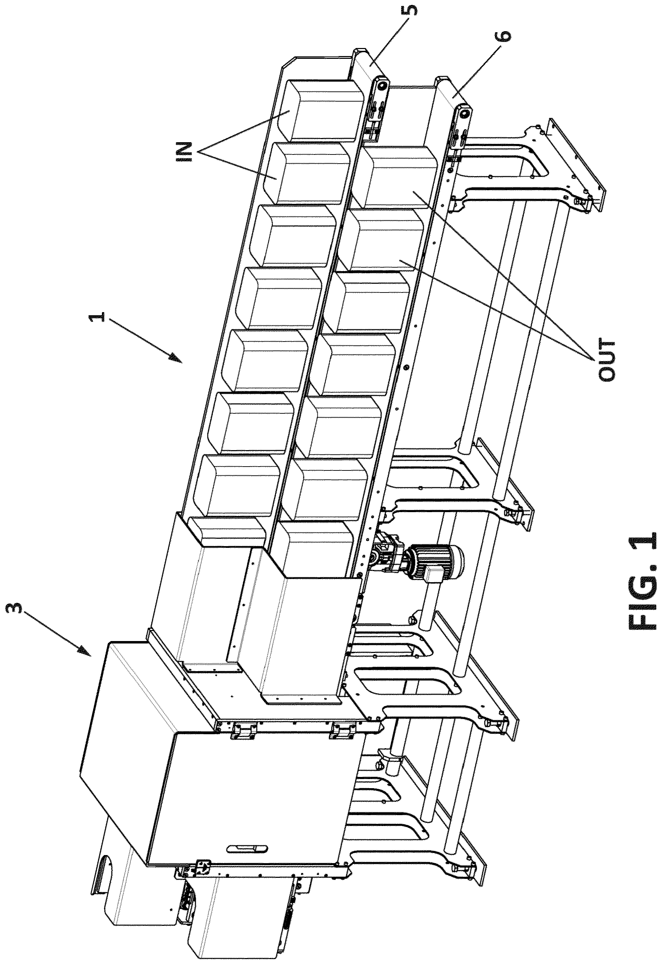

The loading table (1), shown in figure 1, comprises in turn, consecutively, loading and conveying belts, a positioning element (3) and a conveyor element (4).

The loading belts are the only element of the device where the physical intervention of an operator is necessary. An upper belt (5) is loaded with the first die-cut sheets (IN), forming a first stack, and a lower belt (6) is loaded with the second die-cut sheets (OUT), forming a second stack. The belts (5,6) automatically advance with their respective sheet stack loads towards the positioning element (3).

This positioning element (3), also known as a squaring machine, is positioned between the loading belts (5.6) and the conveyor element (4) to straighten the first and second hand-formed stacks.

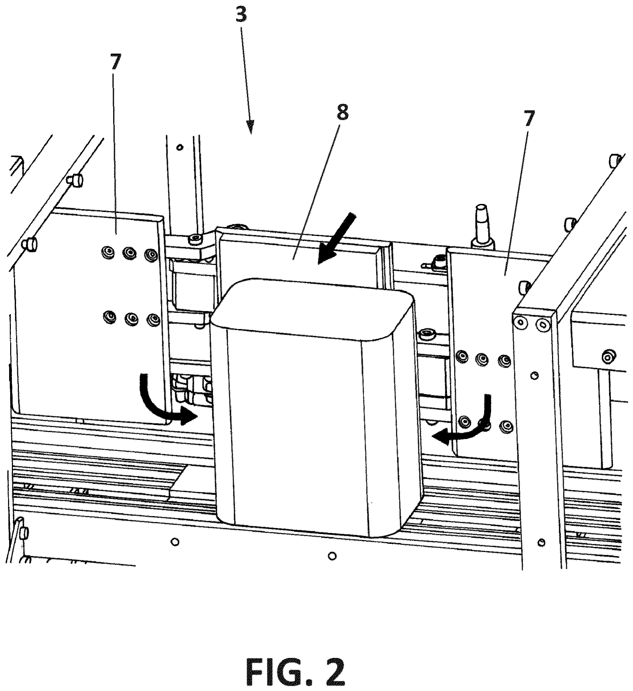

Figure 2 shows the inside of the positioning element (3). The stack in question enters through its belt supported against a fixed front wall, which is not shown in the figure so that the interior can be observed. Then, two rotating blades (7) act on the stack for longitudinal alignment of the sheets that make up the stack. A sliding plate (8) pushes the stack against the aforementioned front wall by means of a linear slide, the stack being perfectly enclosed between the rotating blades (7), the sliding plate (8) and the fixed wall, with all its sheets aligned with each other. When this alignment is achieved, the rotating blades (7) and the sliding plate (8) are released, and the stack passes to the conveyor element (4) driven by its corresponding belt (5,6).

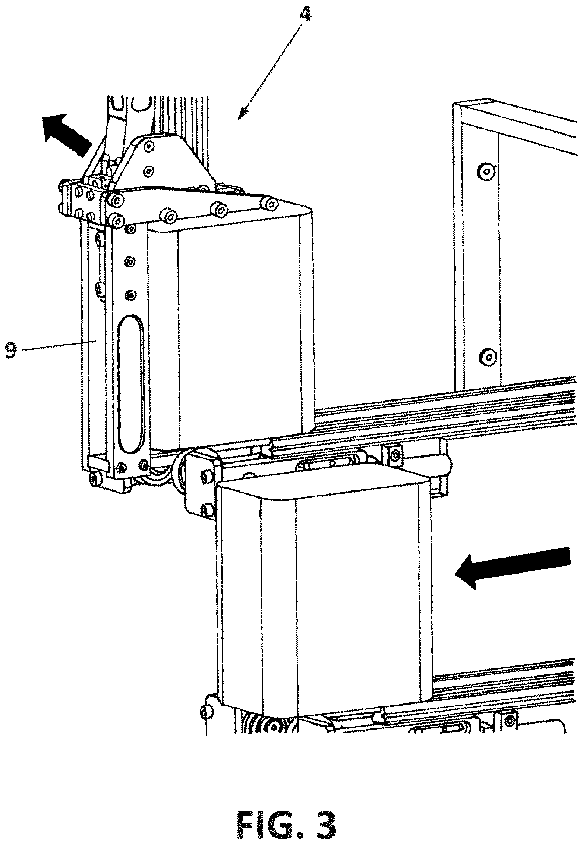

The conveyor element (4) of the loading table (1) consists of a conveyor robot, controlled by the external controller and equipped with grippers (9) for gripping the stack of sheets from the loading conveyor and its subsequent transport to the assembly machine (2). Figure 3 shows a detail of the conveyor element (4) with a stack of sheets.

The stack of sheets is positioned at the end of the conveyor, where it waits for the robot to perform the approach maneuver, hold the stack with the grippers (9) and transport them. The signal to start the loading maneuver is combined. The assembly machine (2) sends a signal to the robot, via the external controller, indicating a lack of material in a loader.

In order for it to pick up a stack, the loading table (1) must in turn send a signal to the external controller informing it that a stack is present at the end of the conveyor. In this way, operations are coordinated, avoiding bottlenecks and interruptions.

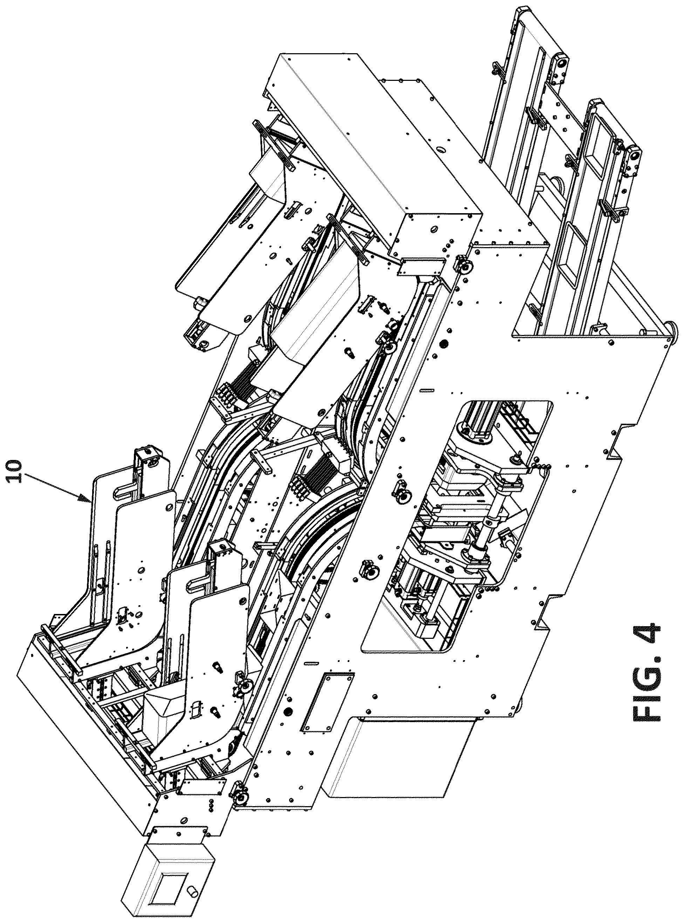

The assembly machine (2), shown in figure 4, comprises a loader (10), a detacher, a pusher, an adhesive applicator and a press and mould former (14).

The assembly machine (2) can assemble two trays per cycle as it has duplicated elements. The loaders are open at the top to allow the gripper (9) to enter. The robot brings the stack close to the sheets already present in the loader, releases the gripper (9) and moves away.

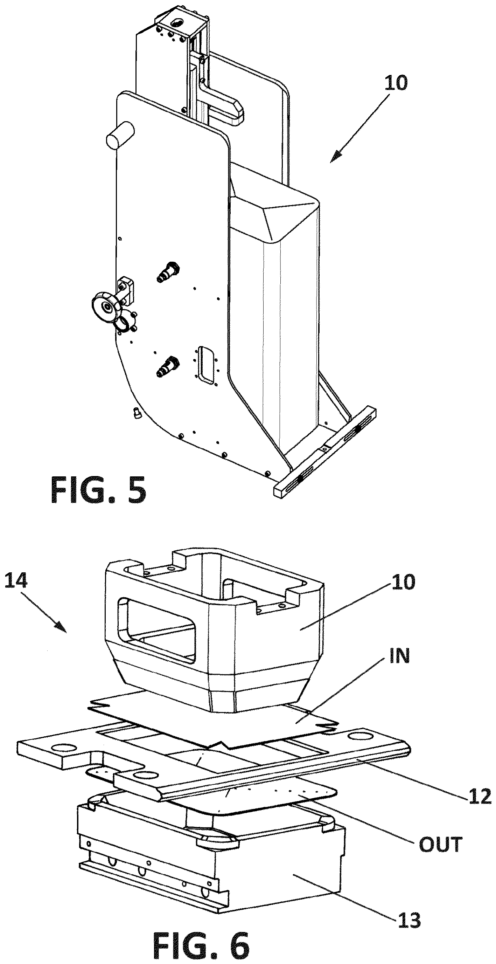

As the sheets can fall backwards, the contents of the loaders are pressed down with a pusher. This aligns the sheets with the inclination of the loaders, thus facilitating their correct detachment. Figure 5 shows a view of a loader (10) that is part of the assembly machine (2).

The detachment of the sheets is done with a piston-actuated suction cup. When the suction cup comes into contact with the sheet, it adheres to the film due to the Venturi effect. When the suction cup moves away, it passes between guides that are wide enough for the suction cup to pass through, but narrow enough for the sheet, breaking the vacuum and releasing the sheet. The cardboard sheet then moves down the guides to the waiting position.

In the standby position, the film is supported on guides in the longitudinal direction. A chain rotating underneath the guides transports the cardboard sheet with a pusher attached to it to the adhesive applicator.

The first step before the tray is formed is the application of adhesive. It is applied to only one of the sheets. A hot melt glue gun system is used for this purpose. A sensor detects the presence of the film and sends a signal to the glue gun to apply beads of glue depending on what has been previously programmed in the external controller. Since the glue takes a short time to dry at room temperature, once the adhesive has been applied, the sheets are quickly fed into a forming machine (14) by pressing and moulding.

This forming machine (14) comprises an upper male mould (11), an intermediate frame (12) and a lower female mould (13), as shown in figure 6.

The male mould (11) acts on a first die-cut sheet (IN), which is pressed downwards towards a second die-cut sheet (OUT), located in a lower plane, with the intermediary of the frame (12).

As soon as two sensors, one for each sheet and linked to the external controller, detect that the housing of the female mould (13) is occupied by the sheets (IN, OUT), the male mould (11) closes on the female mould (13).

The forming process of a heat-sealable tray using the device described above has mainly two stages. In the first stage, the lower female mould (13) is closed to trap the second die-cut sheet (OUT). In this way the outer lip of the future tray is fixed between the frame (12) and the female mould (13). With the second die-cut sheet (OUT) pressed against the frame (12), the male mould (13) presses a first die-cut sheet (IN) through the frame (12) from above. In this way, the inner cavity of the tray takes its shape without deforming the lip in the process.

One advantage of forming the tray with hot glue is that the pressure exerted by the molds (11,13) is not decisive. It has to be just enough to press the two sheets (IN, OUT) together in position, so that the adhesive welds and the tray is assembled. This is an advantage over a process that produces the weld by thermoforming, as a hydraulic system would be needed to apply the required pressure.

Once formed, the tray is released from the mould and falls onto a conveyor belt which transports it to the heat sealer.

The function of the heat sealer is to apply a thin film of plastic over the entire surface of the tray. For this purpose, the trays are transported by grippers to a mould. Due to their geometry, the same movement of picking up the trays also causes the trays that have been processed to come out on the conveyor belt. When the trays are in the mould, the lower part rises.

This closing movement against the upper mould traps the plastic sheet and the cardboard against the top. At the top, the plastic is heat-sealed, and the excess plastic is cut to the outer dimension of the tray lip with a knife. When the process is finished, the mould is opened, and the trays already lined are ejected and new trays are inserted into the mould.

The already formed trays need to be stacked one on top of the other in order to be packed. The automation of this process is done with the charger-counter. This element has a sensor at its infeed which allows counting the number of incoming trays. The quantity counted must be the same as the number of trays formed in each cycle of the heat sealer. When this number is reached, a lower flap is released and drops the trays.

There is a conveyor belt at the bottom. The falling bundles of stacked trays are stacked until the desired bundle is formed. Once this is done, the belt starts and ejects the package.

The packer packs the stacks of formed trays into standard packaging for storage and transport. It comprises the following elements:
- Box opener: The function of this machine is to form a pack so that the packs can be put into it. When the packs are formed, they move along a roller conveyor to the exit of the loader-counter. The packs are fed in and then the full pack continues on its way to the closer.
- Case sealer: The function of this machine is to close the packages once they have been filled. The packaging is then ready for stacking.
- Automatic stacking of crates: Closed packs are stacked on a pallet by a robot. The robot places an empty pallet on a roller conveyor. It then stacks the packs coming out of the sealer following the programmed pattern.

When it is finished, the pallet exits through the roller conveyor, thus ending the process line.

## Claims

1. A device for forming heat-sealable packaging, of the type comprising:
- an inner container formed from a first die-cut sheet (IN);
- an outer shell, bonded to an upper end of the container in the vicinity of its top opening, formed from a second die-cut sheet (OUT); and
- a plastic cover film;
and wherein the device comprises the following consecutive and interrelated elements.
- a loading table (1);
- an assembly machine (2);
- a heat sealer;
- a charger-counter;
- a packer; and
- an external controller, linked to all elements of the device for automation and governance of its operation;
the device being **characterised in that**:
- the loading table (1) comprises, consecutively, loading and conveying belts, a positioning element (3) and a conveyor element (4); and whereby
- the assembly machine (2) comprises a loader (10), a detacher, a pusher, an adhesive applicator and a press and mould former (14), wherein the press and mould former (14) comprises:
- an upper male mould (11) for actuation on a first die-cut sheet (IN);
- an intermediate frame (12) for holding a second die-cut sheet (OUT); and
- a lower female mould (13), for deformation of the plate assembly.

2. Device according to claim 1 wherein the loading belts of the loading table (1) comprise:
- an upper belt (5) for loading the first die-cut sheets (IN); and
- a lower belt (6) for loading the second die-cut sheets (OUT).

3. Device according to any one of the preceding claims wherein the positioning element (3) for straightening stacks of first (IN) and second (OUT) die-cut sheets comprises:
- rotating blades (7) for longitudinal alignment of the stacking blades;
- a fixed wall; and
- a sliding plate (8) for pushing the stack against the front wall by linear sliding.

4. Device according to any of the preceding claims wherein the conveyor element (4) of the loading table (1) is a conveyor robot, governed by the external controller and equipped with grippers (9) for gripping the bundle of sheets from the loading conveyor and its subsequent transport to the assembly machine (2).
